# EUROPÄISCHE PATENTSCHRIFT

(11) **EP 3 452 310 B1**
(45) Veröffentlichungstag und Bekanntmachung des Hinweises auf die Patenterteilung: **22.07.2020**
(21) Anmeldenummer: 17720102.7
(22) Anmeldetag: 26.04.2017
(51) Int. Cl.: B60G 3/10, B60G 3/28, B60G 11/06

(54) **EINZELRADAUFHÄNGUNG EINES FAHRZEUGS MIT EINEM RADFÜHRENDEN BLATTFEDERELEMENT AUS EINEM FASERVERBUND-WERKSTOFF**
SINGLE-WHEEL SUSPENSION ARRANGEMENT OF A VEHICLE HAVING A WHEEL-CONTROLLING LEAF SPRING ELEMENT COMPOSED OF A FIBER COMPOSITE MATERIAL
SUSPENSION À ROUES INDÉPENDANTES D'UN VÉHICULE, DOTÉE D'UN ÉLÉMENT FORMANT RESSORT À LAME GUIDANT LES ROUES, RÉALISÉ DANS UN MATÉRIAU COMPOSITE FIBREUX

(30) Priorität: 03.05.2016 DE 102016207631; 03.02.2017 DE 102017201747
(43) Veröffentlichungstag der Anmeldung: 13.03.2019
(73) Patentinhaber: Bayerische Motoren Werke Aktiengesellschaft, 80809 München (DE)
(72) Erfinder: SEETHALER, Ludwig, 85241 Hebertshausen (DE); BACHMANN, Fabian, 80639 München (DE)
(86) Internationale Anmeldenummer: PCT/EP2017/059992
(87) Internationale Veröffentlichungsnummer: WO 2017/191023

(56) Entgegenhaltungen:
- EP-A1- 0 188 133
- EP-A1- 0 507 975
- WO-A1-96/27507
- WO-A1-2015/132298
- DE-A1-102005 044 222
- DE-A1-102012 221 678
- DE-A1-102013 207 910
- DE-A1-102014 208 403
- DE-U1-202014 004 853
- US-A1- 2014 327 219

## Beschreibung

Die Erfindung betrifft eine Einzelradaufhängung eines zweispurigen Fahrzeugs mit einem in einem Faserverbund-Werkstoff ausgeführten für das Fahrzeug-Rad zusammen mit einem nach Art eines Dämpferbeins angeordneten Dämpfer die Radführung übernehmenden unteren Blattfederelement, welches einerseits an einem Radträger und andererseits an einem Achsträger oder direkt am Fahrzeug-Aufbau angebundenen ist. Zum Stand der Technik wird neben der DE 10 2013 207 910 A1 und der DE 10 2014 208 403 A1 sowie der DE 10 2012 221 678 A1 auf die zur Bildung des Oberbegriffs des Anspruchs 1 herangezogene DE 10 2008 043 330 A1 verwiesen.

Eine der einfachsten und am weitesten verbreiteten Achsen an Kraftfahrzeugen ist insbesondere als Vorderachse eines Personenkraftwagens die sog. Federbeinachse mit einem radführenden Dämpfer, einer koaxial hierzu angeordneten Schraubenfeder und einem unteren Querlenker, welcher zumeist als Dreieckslenker oder Sichellenker ausgeführt ist. Dieser Querlenker ist über ein radseitiges Kugelgelenk mit dem Radträger und üblicherweise über zwei Gummilager mit dem Fahrzeug-Aufbau bzw. einem Achsträger verbunden. Dabei definiert das genannte Kugelgelenk zusammen mit dem Stützlager des Feder-Dämpferbeins die Lenkdrehachse des Rades.

Durch die koaxiale Anordnung der Feder zum Dämpferbein ist eine relativ hohe Stützlagerposition erforderlich, um den benötigten Bauraum der Feder oberhalb des Reifenhüllgebirges unterzubringen, da eine Anordnung neben dem Reifenhüllgebirge zu signifikanten Nachteilen in der Lenkgeometrie des Fahrzeugs führt und einen hohen Bauraumbedarf in Fahrzeug-Querrichtung hat.

In der eingangs letztgenannten Schrift ist eine ähnlich einer Federbeinachse konzipierte Radaufhängung mit einem sog. in faserverstärktem Kunststoff ausgeführten Federlenkermodul gezeigt, welches Modul aus zumindest einem biegeelastischen Längslenker und einem biegeelastischen Querlenker besteht. In dieser Schrift steht explizit geschrieben, dass bei Vorsehen nur eines einzigen Längslenkers dessen Federwirkung nicht ausreicht, weshalb eine zusätzliche (konventionelle) Schraubenfeder vorgeschlagen ist. Letztere soll lediglich bei zwei parallel geschalteten Längslenkern entfallen können, was jedoch sehr viel Bauraum beansprucht.

Eine demgegenüber verbesserte Einzelradaufhängung nach dem Oberbegriff des Anspruchs 1 aufzuzeigen ist daher Aufgabe der vorliegenden Erfindung.

Die Lösung dieser Aufgabe ergibt sich mit den Merkmalen des Anspruchs 1 und ist dadurch gekennzeichnet, dass das untere Blattfederelement zumindest annähernd in Fahrzeug-Querrichtung ausgerichtet ist und fahrzeugaufbauseitig eine in Fzg.-Längsrichtung gemessene Abstützbasis besitzt, dessen Länge zumindest der 0,4-fachen in Fzg.-Querrichtung gemessenen Länge des Blattfederelementes entspricht.
Besonders bevorzugt ist das Blattfederelement zumindest annähernd flächig bzw. eben ausgebildet.
Es ist weiterhin vorgesehen, dass das untere Blattfederelement in Fahrzeughochrichtung betrachtet unterhalb der Raddrehachse angeordnet ist.

In einer ersten möglichen Ausführungsform der Erfindung ist neben diesem unteren Blattfederelement und dem Dämpfer kein weiteres den Radträger eines nicht lenkbaren Rades führendes Element vorgesehen ist. Mit der zumindest annähernd bzw. "ausschließlichen Ausrichtung" in Fzg.-Querrichtung ist dabei implizit ausgedrückt, dass ein erfindungsgemäßes Blattfederelement nur in seinen beiden Endabschnitten (bezogen auf die Längserstreckung des unteren Blattfederelements) angebunden oder befestigt ist, und zwar einerseits am Radträger (radseitig) und andererseits am Fahrzeug-Aufbau (oder an einem Achsträger, also fahrzeugaufbauseitig). Das Breiten-Längen-Verhältnis eines erfindungsgemäßen unteren Blattfederelements kann sich dabei durchaus dem Wert "1" annähern, d.h. ausgehend von dem im Patentanspruch 1 angegebenen Verhältnis von zumindest 0,4 kann dieses Breiten-Längen-Verhältnis auch Werte in der Größenordnung von 0,39 oder 0,8 annehmen; bevorzugt liegt das Breiten-Längen-Verhältnis jedoch im Bereich von 0,4 bis 0,5.

Es wurde erkannt, dass überhaupt kein in der gattungsbildenden Schrift sog. Längslenker erforderlich ist, wenn das Faserverbund-Blattfederelement eine ausreichende Breite zumindest an seiner fahrzeugaufbauseitigen Abstützung aufweist. Diese sog. Abstützbasis, an bzw. mit welcher das Blattfederelement momentenfest, d.h. solchermaßen ohne Zwischenschaltung eines Gelenks oder eines gummielastischen Lagers angebunden ist, dass im Anbindungsabschnitt jegliche Relativbewegung zwischen dem Blattfederelement und dem Fahrzeugaufbau bzw. einem Achsträger ausgeschlossen ist, wird quer zur Längsrichtung des Blattfederelements und somit (zumindest annähernd) in Fzg.-Längsrichtung gemessen und soll zumindest halb so groß sein wie die in Fzg.-Querrichtung gemessene Länge des Blattfederelements zwischen dessen besagter fahrzeugaufbauseitiger Abstützbasis und dessen radträgerseitiger Abstützbasis. Letztere kann schmäler bzw. von geringerer Länge als die fahrzeugaufbauseitige Abstützbasis sein, und zwar insbesondere im Falle einer Vorderrad-Aufhängung, d.h. dann, wenn das Rad lenkbar sein soll. Die Länge der radträgerseitigen Abstützbasis eines erfindungsgemäßen Blattfederelements in einer Fzg.-Radaufhängung kann für ein lenkbares Rad in etwa halb so groß wie die fahrzeugaufbauseitige Abstützbasis sein; bei ausreichendem zur Verfügung stehendem Bauraum oder im Falle eines nicht lenkbaren Rades jedoch auch gleich der oder nur etwas geringer als die aufbauseitige Abstützbasis sein.

Für die Darstellung einer Lenkbarkeit eines erfindungsgemäß aufgehängten oder geführten Rades wird ein bspw. als sog. Revo-Knuckle grundsätzlich bekannter zweigeteilter Radträger mit integrierter Lenkdrehachse (vgl. bspw. Fig.3 der eingangs genannten DE 10 2012 221 678 A1) vorgeschlagen. Die sich damit ergebende Nähe der Lenkdrehachse zur Radmitte sorgt für günstige Störkrafthebelarme, weshalb eine solche Einzelradaufhängung auch für hohe auf das Rad einwirkende Antriebsmomente geeignet ist. Ebenso lassen sich die Kenngrößen der Lenkgeometrie wie Spreizungs- und Nachlaufwinkel sowie Lenkrollradius und Nachlaufstrecke damit ähnlich frei einstellen bzw. darstellen wie bei einer Doppelquerlenker-Achse und es unterliegen diese Lenkgeometrie-Kenngrößen nicht den Bauraum-Restriktionen einer konventionellen Federbeinachse. Eine bei konventionellen Federbeinachsen mit Revo-Knuckle erforderliche Fesselung des Drehfreiheitsgrades um die Hochachse für den nicht lenkbaren Teil bzw. ein nicht lenkbares Element des Radträgers ist vorteilhafterweise bei vorliegender Erfindung wegen der momentenfesten Anbindung des einen Federlenker darstellenden Blattfederelements an diesem nicht lenkbaren Radträger-Element nicht notwendig. Ferner ist mit einer im Radträger integrierten Lenkdrehachse vorteilhafterweise die Stützlagerposition des radführenden Dämpfers mit größerer Freiheit wählbar als bei einer konventionellen Federbeinachse, so dass eine besonders niedrig liegende Karosserielinie des Fahrzeugs im (aufbauseitigen) Stützlagerbereich des Dämpfers dargestellt werden kann.

Um einen Beitrag zur Reduzierung von Fahrzeug-Nickwinkeln unter Längskraft zu leisten, wird weiterhin vorgeschlagen, zumindest die fahrzeugaufbauseitige Anbindung eines erfindungsgemäßen radführenden Blattfederelements in der Seitenansicht schräg zu stellen, d.h. dass das Blattfederelement in Fahrzeug-Querrichtung betrachtet am Fahrzeug-Aufbau gegenüber einer Horizontalebene geneigt angebunden ist. Radträgerseitig kann dies ebenso gestaltet sein, aber es kann das Blattfederelement radträgerseitig auch im wesentlichen horizontal (d.h. parallel zur Fahrbahn des Fahrzeugs) liegen. Mit dieser Maßnahme steht die resultierende Bahn des Radaufstandspunktes bzw. des Radmittelpunktes bei Ein- und Ausfederbewegungen dann ebenfalls schräg und korrespondiert somit mit den aus der kinematischen Analyse von Radaufhängungen bekannten Anfahr- und Bremsstützwinkeln. Aus Rücksicht auf überlagerte Verwindungen des unteren Blattfederelements um die Fahrzeug-Querachse beim Ein- und Ausfedern sollte diese genannte Schrägstellung jedoch auf Werte zwischen 0° und 10° begrenzt sein. Vorteilhaft ist das als Federlenker fungierende Blattfederelement an einer Fzg.-Vorderachse um ca. 3° bis 5° nach hinten (d.h. gegen Fzg.-Fahrtrichtung) oben ansteigend angestellt, während es an einer Fzg.-Hinterachse um ca. 4° bis 7° nach hinten unten abfallend angestellt sein kann.

Was die (beispielsweise momentenfeste) Anbindung des radführenden unteren Blattfederelements am Radträger und am Fzg.-Aufbau betrifft, so ist diese bevorzugt kraftschlüssig dargestellt, d.h. das Blattfederelement ist kraftschlüssig am Radträger und/oder am Achsträger oder am Fahrzeug-Aufbau angebunden, vorzugsweise unter Verwendung von Schrauben, und es kann dabei für die Übertragung von Zug-/Druckkräften in Fahrzeug-Querrichtung ein zumindest annähernd keilförmiger Formschluss vorgesehen sein. Damit ist es möglich, dass das erfindungsgemäße Blattfederelement, welches bei Vergleich einer erfindungsgemäßen Einzelradaufhängung mit einer konventionellen Federbeinachse die dortige koaxial zum Dämpfer angeordnete Schraubenfeder ersetzt, neben den zwischen dem Fzg.-Aufbau und dem Radträger auftretenden Vertikalkräften aus der Radlast sämtliche aus dem Fahrbetrieb resultierenden äußeren dynamischen Kräfte wie Antriebskräfte, Bremskräfte und Seitenkräfte abstützen kann. Zur Abstützung von Längskräften und Momenten ist dabei - wie bereits ausgeführt wurde - eine möglichst breite Abstützbasis, gemessen in Fahrzeug-Längsrichtung, vorgesehen. Bei Personenkraftwagen liegt die Größe bzw. Länge dieser Abstützbasis mit einem geeignet dimensionierten Blattfederelement fahrzeugaufbauseitig im Bereich zwischen 250 Millimetern und 400 mm und radseitig bedingt durch den Platzbedarf eines (lenkbaren) und soweit als nötig eingeschlagenen Vorderrades bei 120 mm bis 200 mm. An einer Fzg-Hinterachse ist radseitig eine größere Abstützbasis in der Größenordnung von 200 mm bis 300 mm möglich, da dort kein nennenswerter Radeinschlag zu berücksichtigen ist.

Dabei sollte im übrigen eine ausreichende Länge des einen radführenden Federlenker bildenden Blattfederelements dargestellt sein, um einen benötigten Ein- und Ausfederweg ohne Überschreitung der zulässigen Beanspruchungen bereitstellen zu können. Abhängig von der Fahrzeug-Gewichtsklasse kann bei Personenkraftwagen eine Länge in der Größenordnung von 350 Millimetern bis 550 mm angemessen sein, wenn - wie weiterhin vorgeschlagen wird - der Faserverbundwerkstoff durch eine geeignete Kunststoffmatrix und Glasfasern als Verstärkungsfasern gebildet ist. Durch die beidseitige momentenfeste Anbindung ist die Gefahr eines Ausknickens unter Seitenkraft sicher ausgeschlossen. Eine solche (endseitige) Anbindung des Blattfederelements kann bspw. durch bereits genannte Schrauben erfolgen, welche das Blattfederelement durchsetzen, was jedoch wegen der Ausführung in Faserverbundwerkstoff eine speziell hierauf abgestimmte Bearbeitung erforderlich macht oder materialabhängig machen kann. Daher können alternativ geeignete Klemmstücke zur Darstellung der momentenfesten Anbindung vorgesehen sein, welche mittels mehrerer Schrauben am Radträger bzw. am Fahrzeug-Aufbau befestigt sind und das (nach formgerechter Fertigung nicht weiter bearbeitete) Blattfederelement geeignet einklemmen. Bei Schrauben, welche ein bzw. das Blattfederelement bogenförmig umgreifen, ist diese Art der Krafteinleitung als Bride mit Bridenplatte bekannt.

Mit geeignet gestalteten Elementen, welche das untere Blattfederelement im Sinne einer kraftschlüssigen Anbindung zwischen sich bzw. zwischen sich und dem Radträger oder dem Fzg.-Aufbau einklemmen, kann gleichzeitig im Hinblick auf eine Übertragung von Zug-/Druck-Kräften ein zusätzlicher Formschluss vorgesehen sein, welcher beispielsweise keilförmig (mit einer in Fzg.-Querrichtung ansteigenden Keilfläche) ausgeführt ist. Besonders vorteilhaft ist eine Ausführung in Form eines Doppelkeiles mit zunächst ansteigender und danach abfallender Keilfläche, da hiermit in kompakter Bauweise sowohl für vom Blattfederelement zu übertragende Zugkräfte als auch für Druckkräfte auf minimalem Bauraum ein wirksamer Formschluss dargestellt ist. Dabei kann eine asymmetrische Gestaltung der Keilflächen für die Übertragung z.B. hoher Zugkräfte mit steilerem Keilwinkel und niedrigerer Druckkräfte mit flacherem Keilwinkel hilfreich sein, um einerseits genügend Formschluss und andererseits genügend projizierte Fläche zur Verfügung zu stellen, damit die Schraubenvorspannkraft (für die kraftschlüssige Anbindung) nicht zu unzulässig hohen Druckspannungen im Faserverbundmaterial des Blattfederelementes führt.

Nach einer vorteilhaften Weiterbildung kann zumindest einer der in Fzg.-Fahrtrichtung betrachteten Randbereiche eines erfindungsgemäßen Blattfederelements (bzw. radführenden sog. Federlenkers) gegenüber einem zwischen diesen Randbereichen liegenden Abschnitt verstärkt ausgeführt sein. "Verstärkt" bedeutet dabei insbesondere, dass die in Fzg.-Hochachsrichtung gemessene Dicke des Blattfederelements entlang zumindest eines seiner beiden Ränder größer ist als in einem Bereich zwischen den Rändern. Die besagte Verstärkung kann alternativ oder zusätzlich durch die im Faserverbundwerkstoff vorgesehenen Verstärkungsfasern vorgesehen sein; vorzugsweise verlaufen diese in den beiden (in Fzg.-Querrichtung verlaufenden) Randbereichen unidirektional (analog dem Blattfederelement) zumindest annähernd in Fzg.-Querrichtung. Zwischen den beiden Randbereichen kann dann quasi ein dünneres Schubfeld liegen, in welchem Lagen von Verstärkungsfasern unter Winkeln von ±45° (zur Fzg.-Querrichtung oder Fzg.-Längsrichtung) verlaufen. Damit übernehmen die Randbereiche des Blattfederelements im Wesentlichen die zu übertragenden Zug-/Druck-Kräfte und Biegemomente, während das dazwischen liegende sog. Schubfeld die Abstützung der Torsionsmomente um die Radachse übernimmt, so wie dies auch bereits in der eingangs genannten DE 10 2014 208 403 A1 erwähnt ist.

Durch eine gezielte Gestaltung des Beulverhaltens des besagten Schubfelds lässt sich vorteilhafterweise die Lenktendenz der erfindungsgemäßen Radaufhängung unter Anliegen eines Bremsmoments gezielt einstellen. Insbesondere lässt sich damit an der Vorderachse eine Nachspurtendenz unter Bremskraft einstellen und an der Hinterachse eine Vorspurtendenz unter Bremskraft. Die genannte Steuerung des Beulverhaltens wird dabei durch eine voreingestellte Abweichung von einer (in Konstruktionslage) völlig ebenen Gestaltung der Ebene des genannten Schubfeldes (zwischen den genannten Blattfederelement-Randbereichen) geschaffen, d.h. das Schubfeld erhält an gezielter Stelle eine geringe vorgeformte Beule. Diese vorweggenommene Verformung steuert dann die Verformung unter Last, also das Beulverhalten. Dabei ist aber auch auf eine ausreichende Stabilität des Blattfederelements bei hohen Lasten zu achten; zu große Verformungswege und Wegknicken müssen vermieden werden.

Im Übrigen kann das Vorspur- und Sturzverhalten einer erfindungsgemäßen Radaufhängung über dem Federweg einerseits durch die Gestaltung der Biegelinie des Blattfederelementes bzw. radführenden Federlenkers beeinflusst werden und andererseits durch die Schrägstellung des Dämpfers (in einer Ansicht in Fahrtrichtung von hinten) gezielt eingestellt werden, wobei eine große Dämpfer-Neigung mit einem hohen Sturzgradienten (des Fug.-Rades) einher geht. Die Biegelinie bestimmt auch die Spurweitenänderung der Fzg.-Achse beim Einfedern, die aus Rücksicht auf Traktion und Geradeaus-Fahrverhalten nicht zu groß gewählt werden sollte. Durch die seitens des Fzg.-Aufbaus eingeleiteten Momente um die FahrzeugLängsachse kann ein Wankwinkelausgleich bei Kurvenfahrt erreicht werden, indem das in den Fzg.-Aufbau eingeleitete Biegemoment des kurvenäußeren Blattfederelementes größer und dasjenige des kurveninneren Federlenkers kleiner wird, so dass sich ein der Aufbauneigung entgegen wirkendes Summenmoment ergibt. Damit wird ein eigenständiger Querstabilisator überflüssig bzw. es wird ein solcher allenfalls noch zur Abstimmung des Eigenlenkverhaltens nur an einer der Achsen des Fahrzeugs benötigt.

Weiterhin kann der radträgerseitige Endabschnitt eines erfindungsgemäß vorgesehenen Blattfederelements bzw. Federlenkers im nicht verbauten Zustand um die Fzg.-Längsachse gebogen ausgeführt sein und damit im verbauten Zustand auf den Radträger ein Moment um die Fzg.-Längsachse aufbringen. Damit kann ein Querkraftausgleich am Dämpfer realisiert werden, indem das radträgerseitige Ende des (einen Federlenker darstellenden) Blattfederelements mit einer derartigen Verformung um die FahrzeugLängsachse verbaut ist, dass das resultierende Moment in der Konstruktions-Lage dem Moment aus dem Versatz zwischen Radaufstandskraft und Angriffspunkt der Federkraft entspricht, so wie dies in der eingangs genannten DE 10 2012 221 678 A1 ausführlich beschrieben ist.

Schließlich wird im Hinblick auf eine möglichst geringe Bauhöhe einer erfindungsgemäßen Radaufhängung auch bei antreibbarem Rad vorgeschlagen, den Dämpfer neben der Antriebswelle mit seiner Unterkante um ein Maß, welches nicht größer als der Durchmesser des Dämpfers ist, in Hochachsrichtung vom Blattfederelement beabstandet anzuordnen. Hierbei ist an einer Fzg.-Vorderachse eine Anordnung des Dämpfers vor Mitte Rad zu bevorzugen, da einerseits der verfügbare Bauraum wegen des kurvenaußen geringeren Lenkeinschlags größer ist und andererseits eine Schrägstellung in der Seitenansicht nach oben hinten die Belastung des erfindungsgemäßen Blattfederelements bei hohen Einfederungen reduziert. Die nach hinten gerichtete Komponente von äußeren kombinierten Längs- und Hochkräften wird dabei durch die nach vorne gerichtete Längskomponente der Reaktionskraft des Dämpfers sowie dessen üblicherweise integrierter Zusatzfeder teilweise kompensiert.

Eine in den vorherigen Abschnitten gemäß Anspruch 2 und Anspruch 3 aufgeführte Lösung mit nur einem einzigen unterem Federlenker ist insbesondere für kleine Fahrzeuge mit geringerer Radlast und niedrigeren Längs- und Seitenkräften sinnvoll. Bei höherer Radlast jedoch muss diese von nur einem Bauteil, nämlich dem einzigen Federlenker getragen werden. Dabei können in den Randfasern des faserverstärkten Federlenkers relativ hohe Spannungen und Dehnungen entstehen, die mit zunehmender Bauteildicke steigen. Andererseits ist zur Gewährleistung der Stabilität bei hohen Längs- und Seitenkräften eine Mindestwandstärke des Faserverbund-Federlenkers erforderlich. Dieser Zielkonflikt ist mit zunehmender Radlast immer schwieriger zu lösen.

In einer alternativen Ausbildung der Erfindung ist es deswegen vorgesehen, dass zumindest ein zweites zumindest annähernd in Fahrzeugquerrichtung ausgerichtetes oberes Blattfederelement den Radträger mit dem Fahrzeugaufbau verbindet. Dieses obere Blattfederelement ist dabei bevorzugt oberhalb der Reifenkontur eines Fahrzeugreifens angeordnet.

Die beiden Blattfederelemente (also das obere und das untere Blattfederlement) verbinden dann den Radträger mit dem Fahrzeugaufbau, insbesondere mit einem Achsträger des Fahrzeuges. In einer bevorzugten Ausführung sind diese Blattfederelemente momentenfest am Radträger und am Fahrzeugaufbau angebunden. Momentenfest bedeutet in diesem Sinne eine Anbindung des Blattfederelements ohne eine Zwischenschaltung eines Gelenks oder eines gummielastischen Lagers.

Besonders bevorzugt ist das bzw. sind beide Blattfederelemente zumindest annähernd flächig bzw. eben ausgebildet.

In einer besonders bevorzugten Ausbildung der Erfindung wird der Radträger über die zwei Blattfederelemente mit dem Fahrzeugaufbau bzw. dem Achsträger verbunden. Alternativ ist es jedoch auch denkbar, dass mehr als zwei, beispielsweise jeweils zwei obere und zwei untere Blattfederelemente den Radträger mit dem Fahrzeugaufbau verbinden. So ist es ebenfalls möglich, ein erstes und ein zweites Blattfederelement in zwei Blattfederelemente zu splitten bzw. aufzuteilen. Im Folgenden wird von zwei Blattfederelementen gesprochen. Die Ausführungsform von genau zwei Blattfederelementen ist jedoch keinesfalls als beschränkend zu betrachten.

Wie bereits genannt sind die Blattfederelemente zumindest annähernd in Fahrzeugquerrichtung ausgerichtet, wobei die Blattfederelemente besonders bevorzugt nur in ihren beiden Endabschnitten (bezogen auf die Längserstreckung der Blattfederelemente) angebunden oder befestigt sind, und zwar einerseits am Radträger und ein andererseits am Fahrzeugaufbau bzw. am Achsträger.

Das untere Blattfederelement ist, wie bereits weiter oben beschrieben, in Fahrzeughochrichtung betrachtet unterhalb der Raddrehachse und das obere Blattfederelemente oberhalb der Reifenkontur eines Fahrzeugreifens angeordnet.
Dabei kann das obere Blattfederelement an einem Ausleger des Radträgers, welcher im Stand der Technik auch als ein sogenannter Schwanenhals bekannt ist, angebunden sein.

Durch die beispielhafte Anordnung des oberen Blattfederelements oberhalb der Reifenkontur des Fahrzeugreifens und des unteren Blattfederelements unterhalb der Raddrehachse, kann ein ausreichend großer Abstand der beiden Blattfederelemente voneinander gewährleistet werden, sodass eine bessere Seitenkraftabstützung sowie eine hohe Stabilität gegen Ausknicken der Blattfederelemente bei hohen Längs- und Seitenkräften realisiert werden kann.

In einer weiteren bevorzugten Ausführung der Erfindung ragt das zweite, obere Blattfederelement in Fahrzeugquerrichtung betrachtet über die Radmittellängsebene hinaus.
Durch die genannte Ausführung des oberen Blattfederelements oberhalb der Reifenkontur ist es möglich, das obere Blattfederelement in Fahrzeugquerrichtung bzw. seiner Länge nach länger auszubilden, wobei dieser dann sogar über die Radmittellängsebene hinausragen kann. So kann vorteilhaft ein ausreichend großer Ein- und Ausfederweg ohne Überschreitung der zulässigen Beanspruchungen gewährleistet werden. Mit anderen Worten ermöglicht die genannte Ausführung eine geringe Federrate bei bzw. trotz hoher Radlasten. Eine flexiblere Dimensionierung und eine komfortablere Abstimmung des Blattfederelements werden dadurch ermöglicht.

Bevorzugt ist zumindest eines der beiden Blattfederelemente, besonders bevorzugt jedoch sind beide Blattfederelemente aus einem faserverstärkten Werkstoff, insbesondere einem Faserverbundkunststoff ausgebildet. Dabei eignet sich beispielsweise ein glasfaserverstärkter Kunststoff zur Ausführung der Blattfederelemente. Die erfindungsgemäße Einzelradaufhängung ermöglicht, insbesondere bei der Verwendung eines faserverstärkten Kunststoffes als Blattfederelement bzw. Blattfederelemente, eine Ausbildung dieser mit einer geringeren Wandstärke und damit eine Verbesserung des eingangs genannten Problems der hohen Spannungen und Dehnungen der Randfasern bei hoher Wandstärke.

Neben einer ausreichenden Länge (in Fahrzeugquerrichtung) der Blattfederelemente ist ebenso eine ausreichende Breite, also eine in Fahrzeuglängsrichtung betrachtet ausreichend lange Abstützbasis des Blattfederelements bevorzugt. Als Abstützbasis wird im Sinne dieser Erfindung diejenige Seite der Blattfederelemente bezeichnet, an bzw. mit welcher ein jedes Blattfederelement angebunden ist. Dabei ist es besonders bevorzugt, dass die Blattfederelemente fahrzeugaufbauseitig eine in Fahrzeuglängsrichtung gemessene Abstützbasis besitzen, deren Länge zumindest der 0,4 fachen in Fahrzeugquerrichtung gemessenen Länge des Blattfederelements entspricht. Das Breiten-Längen Verhältnis der Blattfederelemente kann sich dabei durchaus dem Wert "1" annähern, d.h. ausgehend von dem angegebenen Verhältnis von zumindest 0,4 kann dieses Breiten-Längen-verhältnis auch Werte in der Größenordnung von 0,39 oder 0,8 annehmen. Bevorzugt liegt das Breiten-Längen-Verhältnis jedoch im Bereich von 0,4 bis 0,5.
Die radträgerseitige Abstützbasis eines jeden Blattfederelements, insbesondere des unteren Blattfederelements, kann insbesondere im Falle einer Vorderradaufhängung, d.h. dann, wenn das Rad lenkbar sein soll, schmäler gestaltet sein. Die Länge der radträgerseitigen Abstützbasis kann dann in etwa halb so groß wie die fahrzeugaufbauseitige Abstützbasis sein. Bei ausreichend zur Verfügung stehendem Bauraum oder im Falle eines nicht lenkbaren Rades kann die radträgerseitige Abstützbasis jedoch auch gleichgroß oder nur etwas kleiner als die aufbauseitige Abstützbasis ausgebildet sein.
Die erfindungsgemäße Einzelradaufhängung kann sowohl an einer angetriebenen (üblicherweise einer Hinterachse), als auch an einer nicht angetriebenen Fahrzeugachse ausgebildet sein. Genauso kann die erfindungsgemäße Einzelradaufhängung an einer Achse mit lenkbaren Rädern oder nicht lenkbaren Rädern ausgebildet sein.
Bei einer Ausführung der erfindungsgemäßen Einzelradaufhängung bei lenkbaren bzw. gelenkten Rädern, üblicherweise an der Vorderachse, ist der Radträger bevorzugt zweigeteilt ausgebildet. Gemäß dem sogenannten Revo-Knuckle-Prinzip ist dabei der Radträger bevorzugt in ein erstes mitlenkbares Radträgerteil und ein durch die beiden Blattfederelemente geführtes zweites nicht mitlenkbares Radträgerteil zweigeteilt mit einer integrierten Lenkdrehachse ausgebildet. Das erste mitlenkbare Radträgerteil kann dabei durch das zweite Radträgerteil und eine Spurstange geführt werden. Die beidem Blattfederelemente können am zweiten nichtmitlenkbaren Radträgerteil angebunden sein. Auch der Dämpfer ist bevorzugt gelenkig am nicht-lenkbaren Radträgerteil angebunden. Die sich bei einem solchen Radträger-Prinzip ergebende Nähe der Lenkdrehachse zur Radmitte sorgt für günstige Störkrafthebelarme, weshalb eine solche Einzelradaufhängung auch für hohe auf das Rad wirkende Antriebsmomente geeignet ist.

In einer weiteren vorteilhaften Ausführung der Erfindung ist zumindest das erste, untere Blattfederelement zumindest fahrzeugaufbauseitig in Fahrzeugquerrichtung betrachtet gegenüber einer Horizontalebene geneigt angebunden. Hierzu kann zumindest die fahrzeugaufbauseitige Anbindung des unteren Blattfederelements in der Seitenansicht schräg gestellt sein. Radträgerseitig kann dies ebenso gestaltet sein, genauso kann das das untere Blattfederelemente radträgerseitig jedoch auch im Wesentlichen horizontal (also parallel zur Fahrbahn) ausgerichtet sein. Eine solche Schrägstellung (insbesondere der fahrzeugaufbauseitigen Anbindung) ermöglicht die Reduzierung von Fahrzeug-Nickwinkeln unter Längskräften. Die resultierende Bahn des Radaufstandspunktes bei Ein- und Ausfederbewegungen steht dann ebenfalls schräg und korrespondiert somit mit den aus der kinematischen Analyse von Radaufhängungen bekannten Anfahr- und Bremsstützwinkeln. Aus Rücksicht auf überlagerte Verwindungen des (unteren) Blattfederelements um die Fahrzeugquerachse beim Ein- und Ausfedern soll die genannte Schrägstellung bevorzugt auf Werte zwischen 0° und 10° begrenzt sein. Vorteilhaft ist das untere Blattfederelement an einer Fahrzeugvorderachse um ca. 3° bis 5° nach hinten (d.h. gegen die Fahrzeugfahrtrichtung) oben ansteigend angestellt, während es an einer Fahrzeughinterachse um ca. 4° bis 7° nach hinten unten abfallend angestellt sein kann.

In einer nächsten bevorzugten Ausführung der Erfindung sind die Blattfederelemente, welche auch als Federlenker bezeichnet werden können, kraftschlüssig am Radträger bzw. am Achsträger oder am Fahrzeugaufbau angebunden. Wie eingangs bereits beschrieben ist die Anbindung, insbesondere die radträgerseitige Anbindung der Blattfederelemente bevorzugt momentenfest, also ohne eine Zwischenschaltung von Gelenken oder gummielastischen Lagern ausgebildet. Weiterhin bevorzugt ist außerdem eine genannte kraftschlüssige Verbindung am Radträger bzw. am Achsträger oder Fahrzeugaufbau. Beispielsweise können hierfür Schrauben verwendet werden.
Als weitere Möglichkeit zur kraftschlüssigen Anbindung der Blattfederelemente am Radträger bzw. am Fahrzeugaufbau/Achsträger, können geeignete Klemmstücke vorgesehen sein, welche mittels mehrerer Schrauben am Radträger bzw. am Fahrzeugaufbau befestigt sind und die (nach formgerechter Fertigung nicht weiter bearbeitete) Blattfederelemente geeignet einklemmen. Zur besseren akustischen Entkoppelung ist es dabei außerdem möglich, zwischen die Klemmverbindung eine Gummischicht zwischenzuschalten.
Besonders bevorzugt ist für die Übertragung von Zug-/Druckkräften in Fahrzeugquerrichtung ein zusätzlicher Formschluss zwischen dem Radträger bzw. dem Fahrzeugaufbau und der Blattfederelemente vorgesehen. Dieser Formschluss ist bevorzugt keilförmig ausgebildet, wobei die Keilfläche in Fahrzeugquerrichtung ansteigt. Besonders vorteilhaft ist eine Ausführung in Form eines Doppelkeils mit zunächst ansteigender und danach abfallender Keilfläche, da hiermit in kompakter Bauweise sowohl für von den Blattfederelementen zu übertragende Zugkräfte als auch für Druckkräfte auf minimalem Bauraum ein wirksamer Formschluss realisiert werden kann. Dabei kann eine asymmetrische Gestaltung der Keilflächen für die Übertragung beispielsweise hoher Zugkräfte mit steilerem Keilwinkel und niedriger Druckkräfte mit flacherem Keilwinkel hilfreich sein, um einerseits genügend Formschluss und andererseits genügend projizierte Fläche zur Verfügung zu stellen, damit die Schraubenvorspannung (für die kraftschlüssige Anbindung) nicht zu unzulässig hohen Druckspannungen im Faserverbundmaterial der Blattfederelemente führt. Damit ist es möglich, dass die Blattfederelemente bzw. eines der Blattfederelemente, welche auch die Federfunktion übernehmen, neben den zwischen dem Fahrzeugaufbau und dem Radträger auftretenden Vertikalkräften aus der Radlast auch sämtliche aus dem Fahrbetrieb resultierende äußere dynamische Kräfte wie Antriebskräfte, Bremskräfte und Seitenkräfte abstützen kann.
Zur optimalen Abstützung von Längskräften und Momenten ist dabei - wie bereits ausgeführt wurde- eine möglichst breite Abstützbasis, in Fahrzeuglängsrichtung betrachtet, vorgesehen. Bei Personenkraftwagen liegt die Größe bzw. die Länge einer solchen Abstützbasis mit zwei geeignet dimensionierten Blattfederelementen fahrzeugaufbauseitig im Bereich zwischen 250 mm und 400 mm und radträgerseitig gegebenenfalls bedingt durch den Platzbedarf eines lenkbaren und soweit als nötig eingeschlagenen Fahrzeugrades bei 120 mm bis 200 mm. Bei nicht lenkbaren Fahrzeugrädern, also üblicherweise an einer Fahrzeughinterachse, ist radträgerseitig eine größere Abstützbasis in der Größenordnung von 200 mm bis 300 mm möglich, da dort kein nennenswerter Radeinschlag zu berücksichtigen ist.

In einer weiteren vorteilhaften Ausbildung kann zumindest einer der in Fahrzeugfahrtrichtung betrachteten Randbereiche zumindest einer der beiden Blattfederelemente gegenüber einem zwischen diesen Randbereichen liegenden Abschnitt verstärkt ausgebildet sein. Verstärkt bedeutet in diesem Sinne insbesondere, dass die in Fahrzeughochrichtung gemessene Dicke des bzw. der Blattfederelemente entlang zumindest eines seiner beiden Ränder größer ist als in einem Bereich zwischen den Rändern. Die besagte Verstärkung kann alternativ oder zusätzlich durch die im Faserverbundwerkstoff vorgesehenen Verstärkungsfasern vorgesehen sein; vorzugsweise verlaufen diese in den Randbereichen unidirektional (analog der Blattfederelemente) zumindest annähernd in Fahrzeugquerrichtung. Zwischen den beiden Randbereichen kann dann quasi ein dünnes Schubfeld liegen, in welchem Lagen von Verstärkungsfasern unter Winkel von ±45° (zur Fahrzeugquerrichtung oder Fahrzeuglängsrichtung) verlaufen. Damit übernehmen die Randbereiche des einen oder der beiden Blattfederelemente im Wesentlichen die zu übertragenden Zug-/Druckkräfte und Biegemomente, während das dazwischenliegende sogenannte Schubfeld die Abstützung der Torsionsmomente um die Radachse übernimmt.

Schließlich wird im Hinblick auf eine möglichst geringe Bauhöhe einer erfindungsgemäßen Radaufhängung auch bei antreibbarem Fahrzeugrad vorgeschlagen, den Dämpfer neben der Antriebswelle mit seiner Unterkante um ein Maß, welches nicht größer als der Durchmesser des Dämpfers selbst ist, in Fahrzeughochrichtung vom unteren Blattfederelement beabstandet anzuordnen.

Es ist außerdem hilfreich, den Dämpfer in Fahrzeughochrichtung betrachtet möglichst weit unten am Radträger anzubinden, sodass das Stützlager des Dämpfers möglichst nahe an der Krafteinleitungsstelle des oberen Blattfederelements zu liegen kommt. Dadurch können der Dämpfer und das zweite, obere Blattfederelement mittels einer gemeinsamen Vorrichtung bzw. einem gemeinsamen Bauteil am Fahrzeugaufbau bzw. am Achsträger angebunden werden. Außerdem ermöglicht eine möglichst niedrige Anbindung des Dämpfers eine geringe Haubenlinie.
In einer weiteren bevorzugten Ausgestaltung der Erfindung ist im oberen Blattfederelement eine Ausnehmung bzw. ein Durchgangsloch vorgesehen, durch welches Teile oder Zubehör des Dämpfers hindurchragen können.

Die Erfindung ermöglicht durch die Aufteilung der Federkraft auf die beiden Blattfederelemente eine geringere Wandstärke der Federelemente bei gleichzeitig hoher Stabilität gegen Ausknicken bei Seiten- und Längskräften. Durch die Berücksichtigung von hohen Radlasten, großen Federwegen und verstellbarer Dämpfung ist das Achskonzept mit der erfindungsgemäßen Einzelradaufhängung insbesondere für erhöhte Anforderungen von Mittel- und Oberklassefahrzeugen geeignet.

Diese und weitere Merkmale gehen außer aus den Ansprüchen und aus der Beschreibung auch aus den Zeichnungen hervor, wobei die einzelnen Merkmale jeweils für sich alleine oder zu mehreren in Form von Unterkombinationen bei einer Ausführungsform der Erfindung verwirklicht sein und vorteilhafte sowie für sich genommen schutzfähige Ausführungen darstellen können, für die hier Schutz beansprucht wird.

In den beigefügten Figuren sind verschiedene Ausführungsbeispiele teils in verschiedenen Ansichten dargestellt.

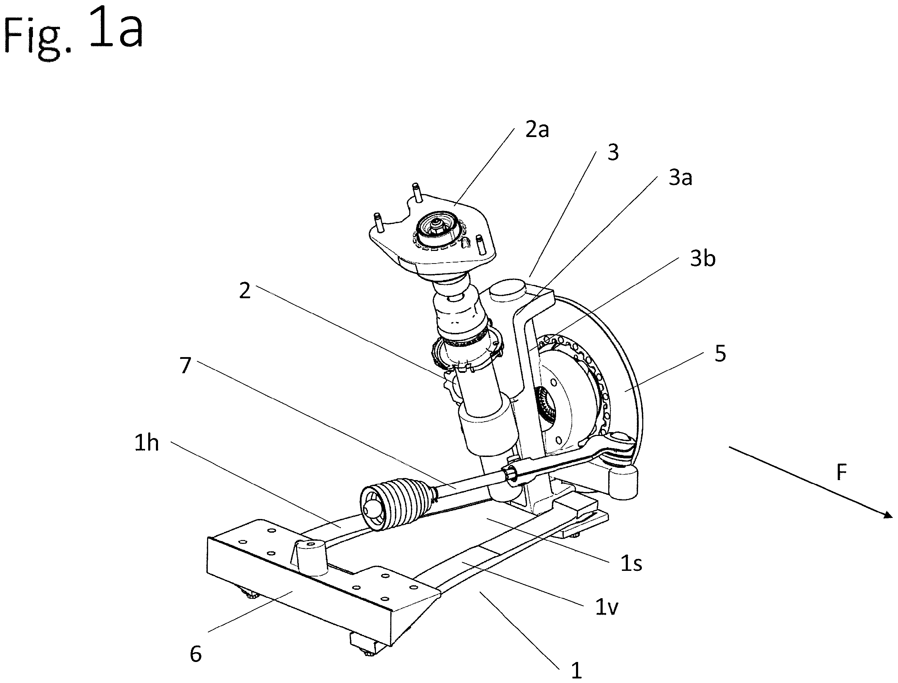

In den Figuren 1a bis 4c sind jeweils Ausführungsbeispiele einer erfindungsgemäßen Einzelradaufhängung mit nur einem einzigen unteren Blattfederelement aufgezeigt, wobei mit Ausnahme der Bezugsziffer 5 für gleiche Elemente in diesen Figuren die gleichen Bezugsziffern verwendet sind.

Gezeigt sind jeweils die wesentlichen Elemente einer erfindungsgemäßen Aufhängung eines linksseitigen Rades eines Personenkraftwagens, und zwar zeigt bzw. zeigen
Fig.1a, 1b ein nicht angetriebenes Vorderrad in zwei verschiedenen isometrischen Ansichten
Fig.2a, 2b ein angetriebenes Vorderrad in zwei verschiedenen isometrischen Ansichten der Übersichtlichkeit halber ohne Spurstange
Fig.3a ein angetriebenes Hinterrad in Ansicht gegen Fahrtrichtung
Fig.3b dieses angetriebene Hinterrad in Draufsicht (auf die Fahrbahn)
Fig.3c dieses Hinterrad in isometrischer Ansicht
Fig.4a eine Bridenklemmung des Blattfederelementes
Fig.4b eine Blattfeder-Klemmung mit Zentralschraube
Fig.4c eine Blattfeder-Klemmung mit mehreren Schrauben neben dem Blattfederelement, jeweils (d.h. bei Fig.4a, 4b, 4c) für das Hinterrad aus den Figuren 3a - 3c.

In **Figur 5** und **Figur 6** ist ein Ausführungsbeispiel einer erfindungsgemäßen Einzelradaufhängung mit zwei Blattfederelementen aufgezeigt.

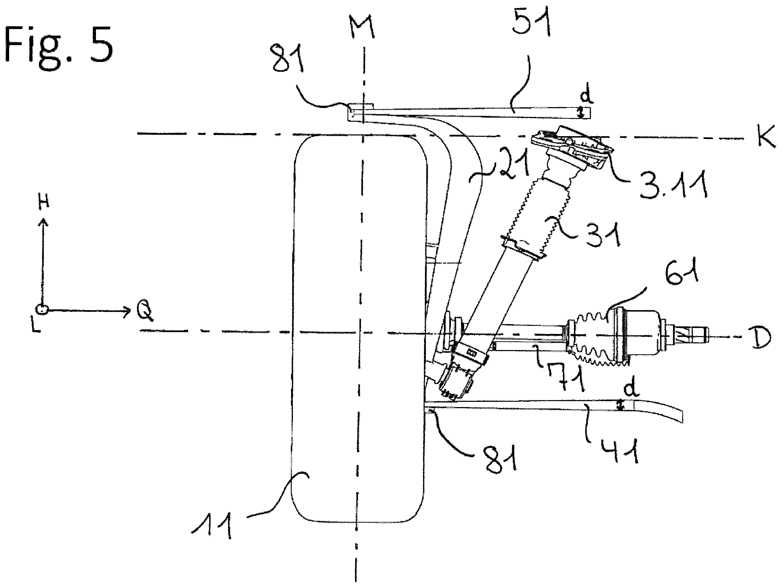

**Figur 5** zeigt dabei ein Ausführungsbeispiel einer erfindungsgemäßen Einzelradaufhängung in einer dreidimensionalen Ansicht von hinten in Fahrtrichtung betrachtet.

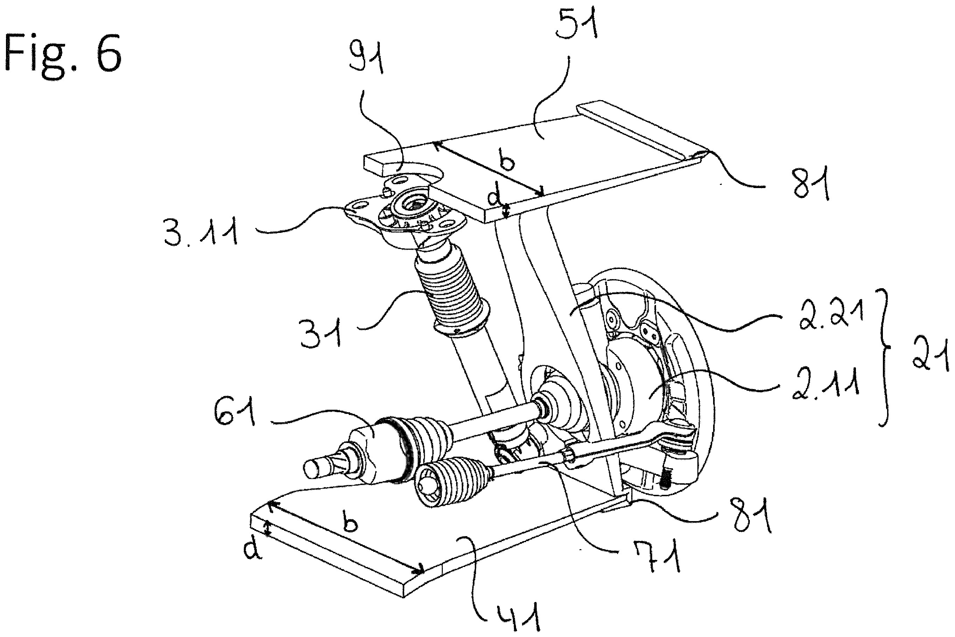

**Figur 6** zeigt das gleiche Ausführungsbeispiel wie Figur 5 in einer dreidimensionalen Ansicht von schrägvorne.
Erfindungswesentlich können dabei sämtliche näher beschriebenen Merkmale sein.

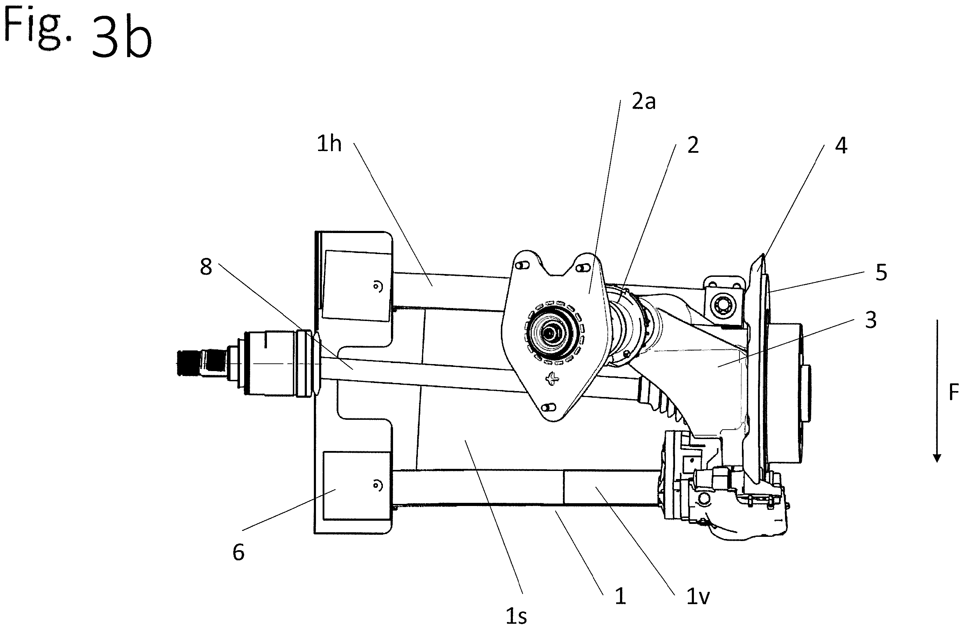

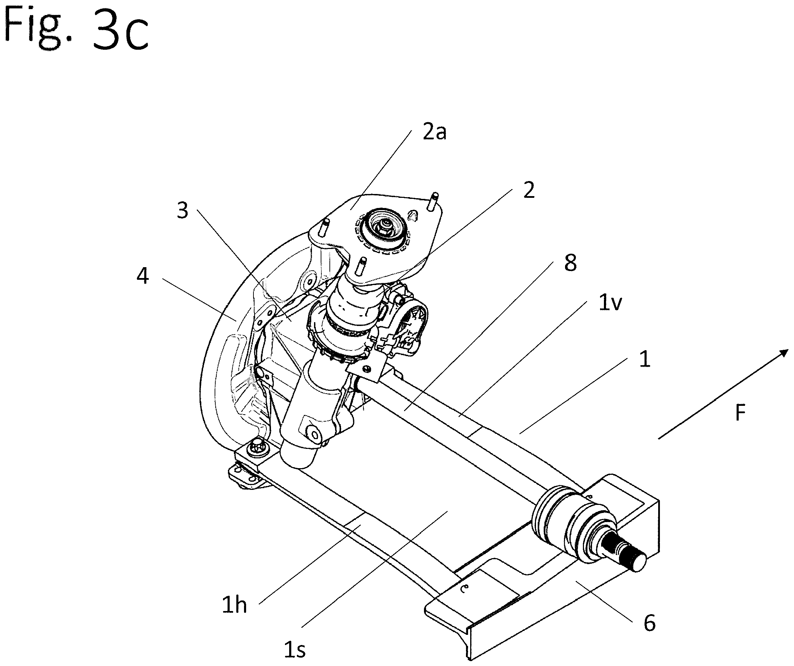

Ein Blattfederelement 1 ist in einer Einzelradaufhängung als sog. Federlenker vorgesehen, um ein Rad des Fahrzeugs in Zusammenwirken mit einem üblichen Dämpfer 2 zu führen und gleichzeitig gegenüber dem nur bruchstückhaft dargestellten Fahrzeug-Aufbau 6 abzufedern, wobei der Dämpfer 2 wie üblich für eine Bedämpfung der vertikalen Ein- und Ausfederbewegungen des Rades vorgesehen ist. Das Rad selbst ist in den Figuren nicht dargestellt, sondern nur der Radträger 3 der jeweiligen Einzelradaufhängung, an welchem unter funktionaler Zwischenschaltung einer Radlagereinheit wie üblich ein nicht gezeigtes Rad zusammen mit einer in den Figuren 1a - 3b sichtbaren Bremsscheibe 5 drehbar angebracht ist. In den Figuren 3c - 4c ist die Bremsscheibe 5 von einem Bremsenschutzblech 4 im Wesentlichen verdeckt. Um vorliegend auch für das nicht gezeigte Rad eine Bezugsziffer zu haben, wird für das Rad die Bezugsziffer 5 der direkt neben dem Rad bzw. innerhalb der Felgenschüssel des Rades liegenden Bremsscheibe 5 mitverwendet..

Für sämtliche Ausführungsbeispiele (und somit für sämtliche Figuren) gilt, dass der Dämpfer 2, welcher über sein oberes Stützlager 2a wie üblich geringfügig elastisch mit dem Fahrzeug-Aufbau (an dieser Stelle nicht gezeigt) verbunden ist, starr mit dem Radträger 3 verbunden ist und diesen somit anteilig führt, jedenfalls in denjenigen Richtungen im Raum, welche nicht dem Bewegungs-Freiheitsgrad des Dämpfers 2 entsprechen. Weiterhin ist in sämtlichen Figuren ein Bruchstück eines Karosserie-Längsträgers 6 des Fahrzeug-Aufbaus dargestellt, an welchem das Blattfederelement 1 befestigt ist. Die Bezugsziffer 6 steht daher auch für den Fahrzeug-Aufbau allgemein und es wird dieser im weiteren (sowie in den Patentansprüchen) als Fzg.-Aufbau 6 bezeichnet. Im Übrigen kann es sich bei diesem Längsträger 6 auch um einen Längsträger eines nicht weiter gezeigten Achsträgers handeln.

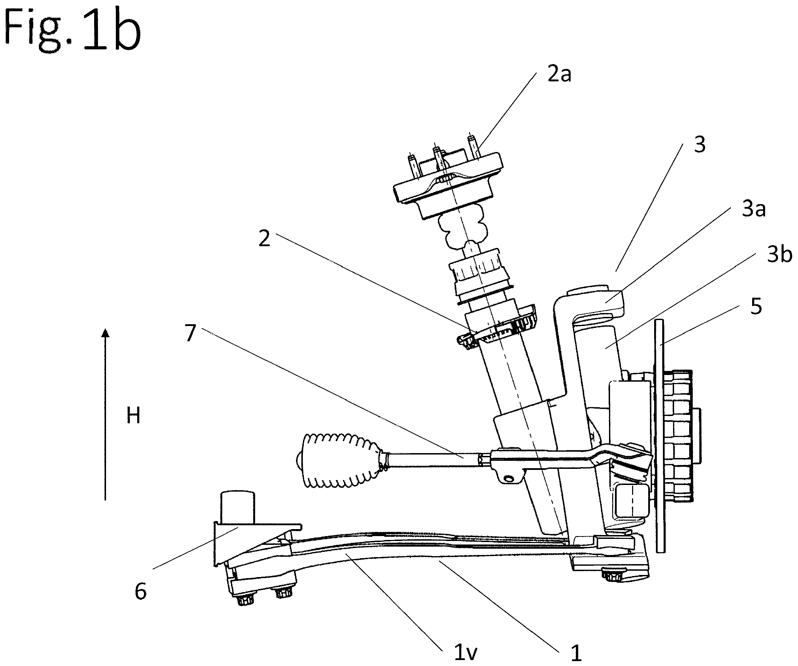

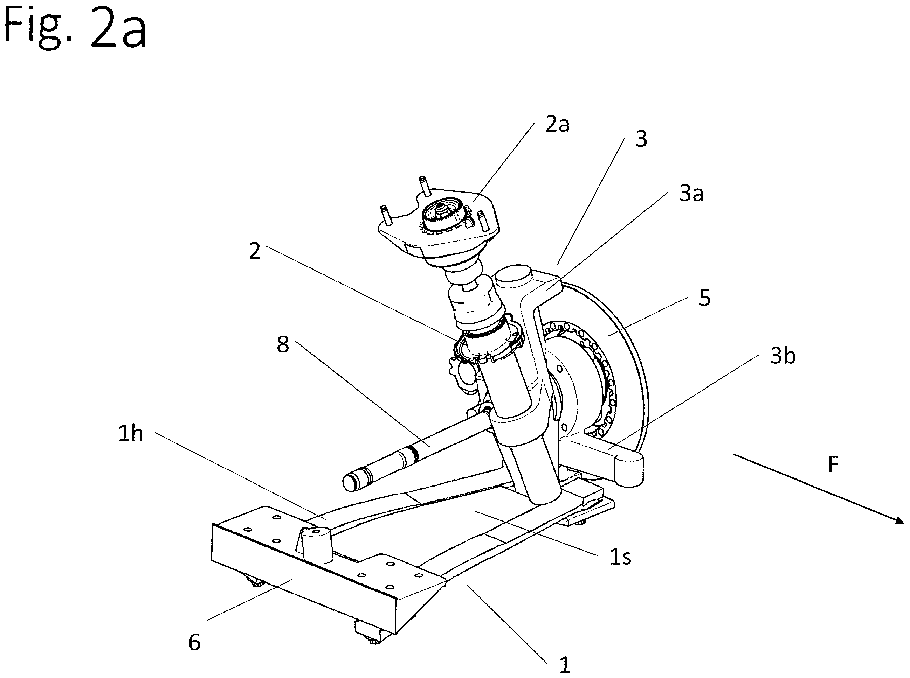

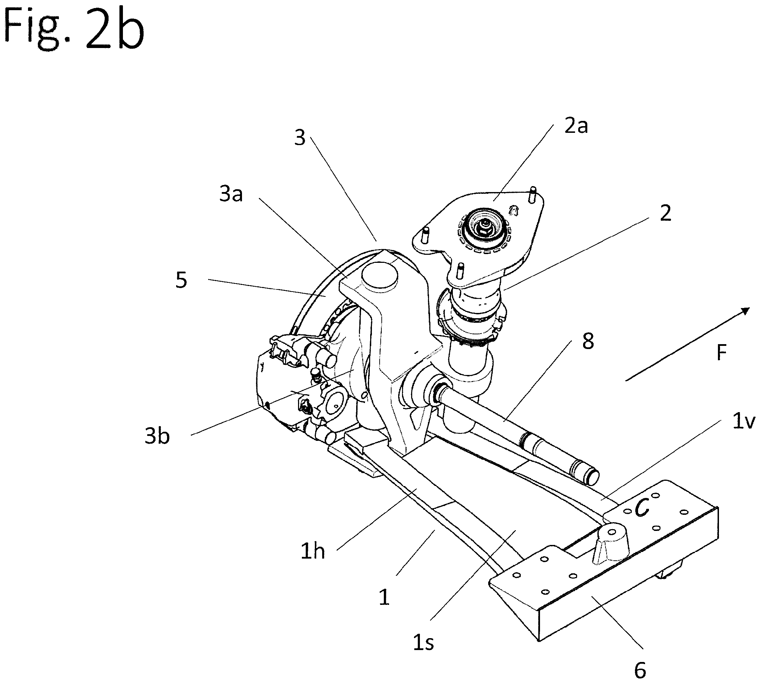

Nun auf die jeweils eine Vorderradaufhängung zeigenden **Figuren 1****(a, b)** und **Fig.2****(a, b)** eingehend ist der dort gezeigte bzw. verbaute Radträger 3 geteilt und mit einer integrierten Lenkdrehachse versehen ausgebildet, so dass dieser neben einem starr mit dem Dämpfer 2 verbundenen ersten Radträger-Element 3a ein gegenüber diesem um die Lenkdrehachse dieser Radaufhängung verdrehbares zweites Radträger-Element 3b aufweist, an welchem letztlich das Rad 5 (seinerseits um die Rad-Drehachse drehbar) angeflanscht ist. Dieser Drehfreiheitsgrad des zweiten Radträger-Elements 3b (sowie der Lenk-Drehfreiheitsgrad des Rades 5) ist durch eine nur in den **Figuren 1a****,** **1b** gezeigte Spurstange 7, welche wie üblich mittels eines Lenkgetriebes in Fzg.-Querrichtung verlagerbar ist, gebunden. Letztere ist in den Figuren 2a, 2b der Übersichtlichkeit halber nicht gezeigt (aber selbstverständlich auch dort vorhanden), weil in diesen Figuren 2(a, b) eine für den Antrieb des Rades 5 vorgesehene Antriebswelle 8 dargestellt ist.

Beim Blattfederelement 1, welches in einer bzw. jeder gezeigten erfindungsgemäßen Radaufhängung das Rad 5 bzw. den Radträger 3 (und in den **Figuren 1****(a, b), 2(a, b)** das erste Radträger-Element 3a) zusammen mit dem Dämpfer 2 führt, handelt es sich um ein flächiges annähernd trapezförmiges Bauelement, welches mit seiner größeren Längserstreckung in Fzg.-Querrichtung ausgerichtet ist, die senkrecht zu dem stellvertretend figürlich dargestellten Rad 5 verläuft. Mit seinen kürzeren Seiten ist das Blattfederelement 1 in Fzg.-Längsrichtung ausgerichtet, welche jedenfalls in diesen Ausführungsbeispielen mit der Längserstreckung des bruchstückhaft dargestellten Karosserie-Längsträgers 6 zusammenfällt bzw. zu dieser parallel ist. Gleich ausgerichtet und bezüglich des Fahrzeugs bzw. des Fzg.-Aufbaus nach vorne orientiert ist die Fahrtrichtung F des Fahrzeugs, zu welcher die Fzg.-Querrichtung in einer Horizontalebene betrachtet senkrecht steht.

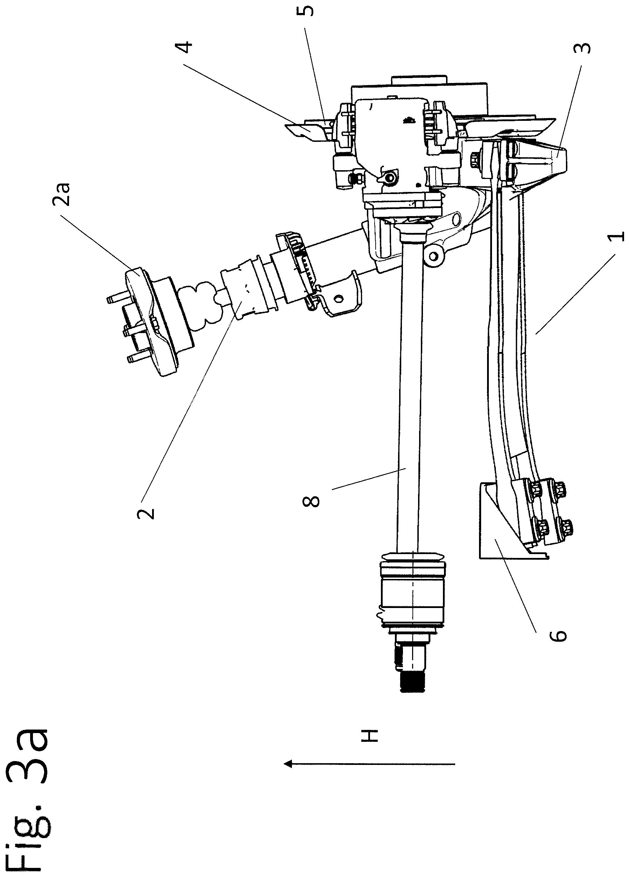

Sowohl der in Fahrtrichtung F betrachtet vordere Randbereich 1v des Blattfederelements 1 als auch dessen in Fahrtrichtung F betrachtet hinterer Randbereich 1h sind gegenüber einem zwischen diesen Randbereichen 1v, 1h liegenden Bereich oder Abschnitt 1s, welcher quasi als ein Schubfeldfeld betrachtet werden kann, verstärkt, d.h. in Hochachsrichtung H (diese ist nur in den **Fig.1b****,** **3a** dargestellt) des Fahrzeugs betrachtet dicker ausgebildet als der Schubfeld-Bereich 1s. Dabei ist das Blattfederelement 1 in sämtlichen vorliegenden Ausführungsbeispielen nur mit den beiden Endabschnitten seiner verstärkten Randbereiche 1v, 1h einerseits am Radträger 3 und andererseits am Fzg.-Aufbau 6 bzw. am Karosserie-Längsträger 6 momentenfest angebunden, jedoch ist dies keinesfalls ein obligatorisches Merkmal. Die in Fzg.-Längsrichtung (F) gemessenen Strecken zwischen den beiden äußersten Kanten, d.h. der in Fahrtrichtung F betrachtet am weitesten vorne liegenden Kante und der am weitesten hinten liegenden Kante der momentenfest angebundenen Randbereiche 1v, 1h stellen die jeweilige Abstützbasis am Radträger 3 bzw. am Fzg.-Aufbau 6 dar.

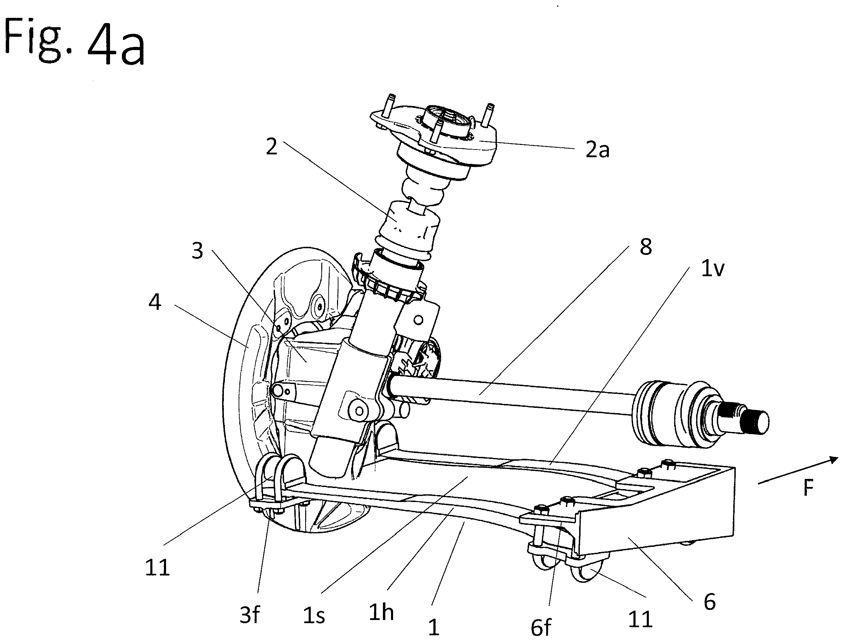

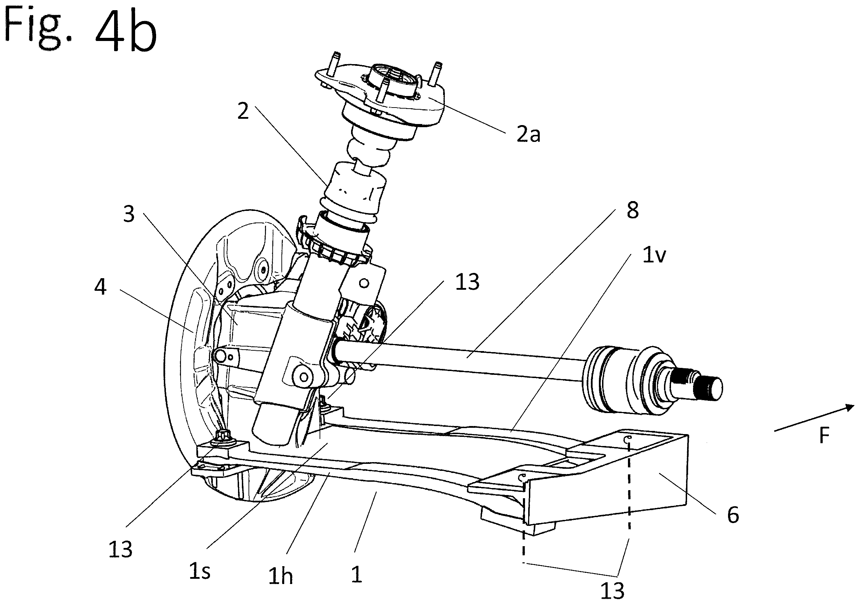

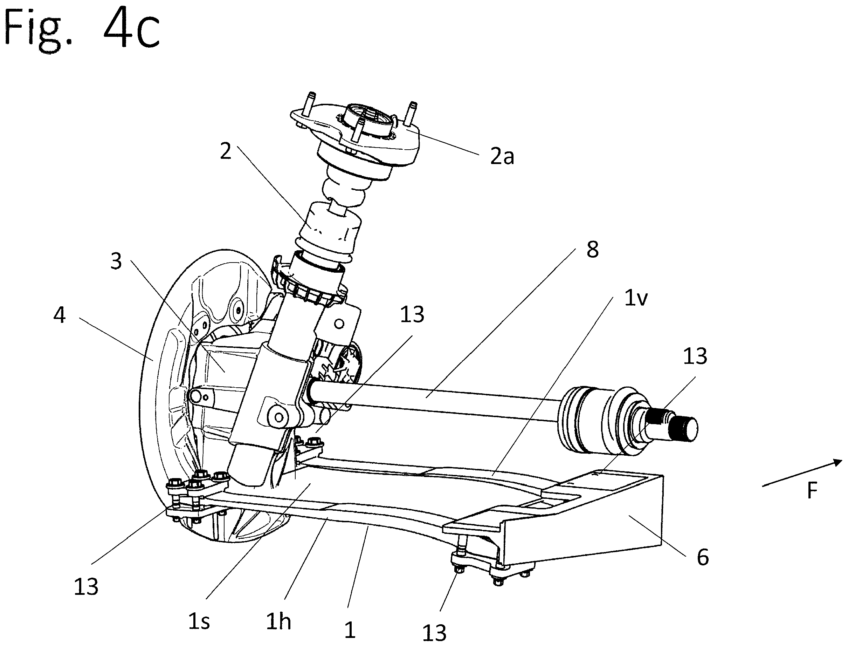

Beispiele für die Gestaltung einer solchen momentenfesten Anbindung sind in den **Figuren 4a****,** **4b****,** **4c** gezeigt. So zeigt **Fig.4a** eine sog. Bridenklemmung, wobei der dem Radträger 3 zugewandte Endabschnitt sowohl des hinteren Randbereichs 1h als auch des vorderen Randbereichs 1v des Blattfederelements 1 mittels oder nach Art einer Rohrschelle am Radträger 3 befestigt sind. Analog sind der dem Fzg.-Aufbau 6 zugewandte Endabschnitt sowohl des hinteren Randbereichs 1h als auch des vorderen Randbereichs 1v des Blattfederelements 1 mittels oder nach Art einer Rohrschelle am Fzg.-Aufbau 6 befestigt. Ein jeweils am Radträger 3 sowie am Fzg.-Aufbau 6 vorgesehener und geeignet geformter Befestigungsabschnitt 3f bzw. 6f wird hierfür von der sog. Bride in Form eines U-förmigen Zugschraubenelements umgriffen, ebenso wie der am Befestigungsabschnitt 3f bzw. 6f anliegende jeweilige Randbereich-Endabschnitt des Blattfederelements 1. Auf die freien Enden dieser Bride werden Schraubenmuttern aufgeschraubt, welche dann eine auf der dem jeweiligen Befestigungsabschnitt (3f, 6f) gegenüberliegende Seite des jeweiligen Randbereich-Endabschnitts des Blattfederelements vorgesehene Bridenplatte 11 gegen den Randbereich-Endabschnitt spannen. Jedenfalls bei dieser Art der momentenfesten Anbindung ist der sog. Schubfeld-Bereich 1s des Blattfederelements 1 gegenüber dessen genannten Randbereich-Endabschnitten in Fzg.-Querrichtung betrachtet geringfügig zurück versetzt, da andernfalls die Bride diesen Schubfeld-Bereich 1s durchdringen müsste.

Bei der Ausführungsform gemäß **Fig.4b** ist eine solche Durchdringung des Blattfederelements 1 durch jeweils eine Schraube 13 je momentenfester Anbindung dargestellt, denn hier ist jeder Endabschnitt jedes Randbereichs 1h, 1v des Blattfederelements 1 auf einfachste Weise mit seinem jeweiligen Gegenstück, nämlich mit einem Befestigungsabschnitt 3f des Radträgers 3 bzw. mit einem Befestigungsabschnitt 6f des Fzg.-Aufbaus 6 verschraubt, d.h. kraftschlüssig verbunden. Am Fzg.-Aufbau 6 sind die Schrauben 13 nicht sichtbar, weil diese von unten eingebracht sind; stellvertretend sind gestrichelte Schraubenachsen dargestellt und mit der Bezugsziffer 13 versehen. Der jeweilige Randbereich-Endabschnitt des Blattfederelements 1 sollte dabei für diese Durchdringung mittels einer herkömmlichen Schraube 13 (mit einer den Kraftschluss herstellenden und hier im Fzg.-Aufbau integrierten Schraubenmutter) geeignet ausgelegt bzw. gestaltet sein.

Auch bei der Ausführungsform gemäß **Fig.4c** sind Schrauben 13 zur Darstellung der momentenfesten kraftschlüssigen Anbindung vorgesehen, jedoch durchdringen diese hier nicht die besagten Blattfeder-Randbereich-Endabschnitte, sondern hier sind jeweils vier Schrauben 13 vorgesehen, von denen zwei (ähnlich wie der der Bridenklemmung von Fig.4a) auf jeder Seite des jeweiligen Randbereich-Endabschnittes vorgesehen sind und die abermals zusammen mit einem Plattenelement 11, welches funktional der Bridenplatte 11 aus **Fig.4a** entspricht, die jeweiligen Randbereich-Endabschnitte des Blattfederelements 1 gegen den jeweiligen Befestigungsabschnitt 3f bzw. 6f des Radträgers 3 bzw. des Fzg.-Aufbaus 6 verspannen.

Nunmehr auf die **Figuren 3a** - **3c** Bezug nehmend ist hierein eine erfindungsgemäße Hinterradaufhängung gezeigt, welche kein Lenken des Rades 5 erlaubt. Entsprechend einfach ist demzufolge der Radträger 3 gestaltet. Insbesondere aus Fig.3a, die eine Ansicht gegen Fahrtrichtung zeigt, ist entnehmbar, dass der in Fahrtrichtung vordere Randbereich 1v des Blattfederelementes 1 in Hochachsrichtung H betrachtet etwas höher liegt als dessen hinterer Randbereich 1h. Bei Betrachtung in Fzg.-Querrichtung ist das Blattfederelement 1 hier somit fahrzeugaufbauseitig und radträgerseitig gegenüber einer Horizontalebene geringfügig geneigt angebunden. Die Figuren 3a und 3c zeigen weiterhin, dass auch bei einem angetriebenen Rad eine niedrige Gesamt-Bauhöhe, welche in Hochachsrichtung H von der Fahrbahn bis zum Stützlager 2a des Dämpfers 2 gemessen wird, erzielbar ist, indem der Dämpfer 2 neben dem radträgerseitigen Faltenbalg der Antriebswelle 8 mit seiner Unterkante knapp oberhalb des Blattfederelements 1 positioniert bzw. solchermaßen liegend am Radträger 3 befestigt ist.

Abschließend seien noch bislang nicht genannte Vorteile einer erfindungsgemäßen Einzelradaufhängung genannt. So ergibt sich durch die relativ hohe Eigendämpfung eines Faserverbund-Kunststoffes (als Material für das Blattfederelement 1) ein hohes akustisches Entkopplungs-Potenzial der Radführung gegenüber Abrollgeräuschen und reifenseitigen Anregungen. Sowohl an einer Vorderachse als auch an einer Hinterachse ist die Anzahl der verbauten bzw. zu verbauenden Bauteile geringer als bei entsprechenden herkömmlichen Achskonstruktionen, wobei jeweils ein verringerter Bauraumbedarf vorliegt, was an der Vorderachse eine gute Lenkkinematik ermöglicht und Störeinflüsse bei niedrigem Gewicht gering hält, wobei der Gewichtsvorteil auch für die Hinterachse gilt. Weiterhin können auch ohne eine aktive Wankstabilisierungsmaßnahme geringe Wankwinkel erzielt werden.

In **Figur 5** ist eine Einzelradaufhängung einer mit einer Antriebswelle 61 angetriebenen Fahrzeugvorderachse aufgezeigt. Diese Einzelradaufhängung umfasst dabei ein lenkbares Fahrzeugrad sowie einen Radträger 21, an welchem ein Dämpfer 31 nach Art eines Dämpferbeins angeordnet ist. An dem Radträger 21 sind zwei zumindest annähernd in Fahrzeugquerrichtung Q ausgerichtete Blattfederelemente 41, 51 angeordnet, die den Radträger 21 mit einem nicht gezeigten Fahrzeugaufbau bzw. einem ebenfalls nicht gezeigten Achsträger verbinden.
Wie insbesondere in **Figur 6** zu erkennen, ist der Radträger 21 gemäß dem sogenannten Revo-Knuckle-Prinzip zweiteilig, mit einem lenkbaren 2.11 und einen nicht lenkbaren Radträgerteil 2.21 ausgebildet. Bei einer Lenkbewegung des Fahrzeugrades dreht sich also das lenkbare Radträgerteil 2.11 mit dem Fahrzeugrad mit, während das nicht lenkbare Radträgerteil 2.21 in seiner Ausgangslage verbleibt. Beide Blattfederelemente 41, 51 sowie auch der Dämpfer 31 sind dabei am nicht lenkbaren Radträgerteil 2.21 angebunden. Der Dämpfer 31 ist gelenkig am Radträgerteil 2.21 angebunden und damit nicht an der Radführungsaufgabe beteiligt. Das lenkbare Radträgerteil 2.11 wird von dem nicht lenkbaren Radträgerteil 2.21 und einer Spurstange 71 geführt.

Aus **Figur 5** ist zu entnehmen, dass das erste, untere Blattfederelement 41 in Fahrzeughochrichtung H betrachtet unterhalb einer Raddrehachse D, während das zweite, obere Blattfederelement 51 oberhalb der Raddrehachse D und sogar oberhalb der Reifenkontur K des Fahrzeugreifens 1 angeordnet ist. Die beiden Blattfederelemente 41, 51 übernehmen gemeinsam die Feder- und die Radführungsfunktion, weshalb eine nach dem Stand der Technik üblicherweise verwendete Feder nicht mehr notwendig ist. Um neben der genannten Radführungsfunktion auch eine ausreichende Federfunktion übernehmen zu können, sind beide Blattfederelemente 41, 51 in diesem konkreten Beispiel aus einem faserverstärkten, insbesondere glasfaserverstärkten Kunststoff ausgebildet.

Um optimale Eigenschaften bezüglich Federwirkung und Lastaufnahme zu erreichen, ragt das obere Querblattfederelement 51 in Fahrzeugquerrichtung Q über die Radmittellängsebene M in Richtung Fahrzeugaußen hinaus. Dies ermöglicht eine ausreichend lange Ausführung des oberen Blattfederelements 51.
Das untere Blattfederelement 41 ist dabei in Fahrzeughochrichtung H betrachtet möglichst weit unten am Radträger 21 angebunden, sodass der vertikale Abstand zwischen dem oberen und dem unteren Blattfederelement 41, 51 möglichst groß ist. Dies ermöglicht eine hohe Stabilität bezüglich einem Ausknicken der Blattfederelemente 41, 51 bei hohen Längs- und Seitenkräften.

Beide Blattfederelemente 41, 51 sind kraftschlüssig am Fahrzeugaufbau bzw. am Achsträger und auch am Radträger 21 angebunden, was in den Figuren nicht zu erkennen ist. Zusätzlich bzw. alternativ zu dieser kraftschlüssigen Anbindung sind beide Blattfederelemente 41, 51 radträgerseitig formschlüssig angebunden. Der Formschluss zwischen Radträger 21 und der Blattfederelemente 41, 51 wird in diesem konkreten Fall durch eine Keilverbindung bzw. eine keilförmige Klemmverbindung 81 realisiert, in welcher die beiden radträgerseitigen Enden der Blattfederelemente in den Radträger keilförmig eingeklemmt sind.

Wie insbesondere in **Figur 6** zu erkennen, sind die beiden Blattfederelemente 41, 51, insbesondere jedoch das untere Blattfederelement 41, sowohl in ihrer Breite b, als auch in ihrer Dicke d von der Fahrzeugaufbauseite in Richtung des Radträgers 21 schmäler bzw. dünner werdend ausgebildet. Die Verschmälerung in der Breite b des (insbesondere unteren) Blattfederelements 41 ist insbesondere zur Vermeidung einer Kollision des Blattfederelements 41 mit dem eingeschlagenen bzw. gelenkten Fahrzeugrad vorgesehen.

Um eine gemeinsame Anbindung des Dämpferstützlagers 3.11 mit dem oberen Blattfederelement 51 und damit nur mehr ein fahrzeugaufbauseitiges Anbindungsbauteil zu ermöglichen, ist der Dämpfer 31 in Fahrzeughochrichtung H betrachtet möglichst weit unten, insbesondere unmittelbar unterhalb der radträgerseitigen Anbindung des unteren Blattfederelements 41 und in Fahrzeugquerrichtung Q betrachtet neben der Raddrehachse D am Radträger 21 angebunden. So kann neben einer gemeinsamen Anbindung des oberen Blattfederelements 51 mit dem Dämpferstützlager 3.11 gleichzeitig eine niedrige Haubenlinie erreicht werden.

Insbesondere im Falle eines schaltbaren Dämpfers 31 ist für Teile des Dämpfers bzw. Zubehör wie beispielsweise ein Kabelabgang, eine Ausnehmung 91 im oberen Blattfederelement 51 vorgesehen.

## Patentansprüche

1. Einzelradaufhängung eines zweispurigen Fahrzeugs mit einem in einem Faserverbund-Werkstoff ausgeführten und für das Fahrzeug-Rad (5) zusammen mit einem nach Art eines Dämpferbeins angeordneten Dämpfer (2, 3) die Radführung übernehmenden unteren Blattfederelement (1, 41), welches einerseits an einem Radträger (1, 21) und andererseits an einem Achsträger oder direkt am Fahrzeug-Aufbau (6) angebundenen ist,
**dadurch gekennzeichnet, dass** das untere Blattfederelement (1, 41) zumindest annähernd in Fahrzeug-Querrichtung ausgerichtet ist und fahrzeugaufbauseitig eine in Fzg.-Längsrichtung (F) gemessene Abstützbasis besitzt, dessen Länge zumindest der 0,4-fachen in Fzg.-Querrichtung gemessenen Länge des unteren Blattfederelementes (1, 41) entspricht, und wobei das untere Blattfederelement (1, 41) in Fahrzeughochrichtung (H) betrachtet unterhalb der Raddrehachse (D) angeordnet ist.

2. Einzelradaufhängung nach Anspruch 1, wobei das untere Blattfederelement (1, 41) die Federfunktion übernimmt und wobei neben diesem einzigen unteres Blattfederelement (1, 41) und dem Dämpfer (2, 31) kein weiteres den Radträger (3, 21) eines nicht lenkbaren Rades führendes Element vorgesehen ist.

3. Einzelradaufhängung nach Anspruch 1 oder 2, wobei die fahrzeugaufbauseitige Abstützbasis in Fahrzeuglängsrichtung betrachtet länger ist, als eine radseitige Abstützbasis.

4. Einzelradaufhängung nach einem der vorangegangenen Ansprüche, wobei für die Darstellung einer Lenkbarkeit des Rades (5) ein zweigeteilter Radträger (3, 21) mit integrierter Lenkdrehachse vorgesehen ist, dessen erstes Radträger-Element (3a, 2.21) durch das untere Blattfederelement (1, 41) und den Dämpfer (2, 31) geführt ist, während dessen zweites das Rad (5) tragende Radträger-Element (3b, 2.11) durch das erste Radträger-Element (3a, 2.21) und eine Spurstange (7, 71) oder dgl. geführt ist.

5. Einzelradaufhängung nach einem der vorangegangenen Ansprüche, wobei der radträgerseitige Endabschnitt des unteren Blattfederelements (1, 41) im nicht verbauten Zustand um die Fzg.-Längsachse (F) gebogen ausgeführt ist und damit im verbauten Zustand auf den Radträger (3, 21) ein Moment um die Fzg.-Längsachse (F) aufbringt.

6. Einzelradaufhängung nach Anspruch 1, wobei ein zweites zumindest annähernd in Fahrzeugquerrichtung ausgerichtetes oberes Blattfederelement (51) den Radträger (3, 21) mit dem Fahrzeugaufbau verbindet und wobei das obere Blattfederelement (51) oberhalb der Reifenkontur (K) eines Fahrzeugreifens (11) angeordnet ist.

7. Einzelradaufhängung nach Anspruch 6, wobei das obere Blattfederelement (51) in Fahrzeugquerrichtung (Q) betrachtet über die Radmittellängsebene (M) in Richtung Fahrzeugaußen hinausragt.

8. Einzelradaufhängung nach einem der vorangegangenen Ansprüche 6 oder 7, wobei der Radträger (3, 21) in ein erstes mitlenkbares Radträgerteil (2.11) und ein durch die beiden Blattfederelemente (41, 51) geführtes zweites nicht mitlenkbares Radträgerteil (2.2) zweigeteilt ist und wobei die beiden Radträgerteile (2.11, 2.21) gelenkig miteinander verbunden sind.

9. Einzelradaufhängung einem der vorangegangenen Ansprüche 6 - 8, wobei zumindest ein Blattfederelement (1, 41, 51) zumindest fahrzeugaufbauseitig in Fahrzeug-Querrichtung (Q) betrachtet gegenüber einer Horizontalebene geneigt angebunden ist.

10. Einzelradaufhängung nach einem der Ansprüche 6 - 9, wobei das untere Blattfederelement (1, 41) und/oder das obere Blattfederelement (51) kraftschlüssig am Radträger (3, 21) und/oder am Achsträger oder Fahrzeug-Aufbau (6) angebunden sind und für die Übertragung von Zug-/Druckkräften in Fahrzeug-Querrichtung an zumindest einem Blattfederelement (1, 41, 51) ein zumindest annähernd keilförmiger Formschluss vorgesehen ist.

11. Einzelradaufhängung nach einem der vorangegangenen Ansprüche 6 - 10, wobei zumindest einer der in Fzg.-Fahrtrichtung betrachteten Randbereiche (1v, 1h) zumindest eines Blattfederelements (1, 41, 51) gegenüber einem zwischen den Randbereichen (1v, 1h) liegenden Abschnitt (1s) verstärkt ausgebildet ist.

12. Einzelradaufhängung nach einem der vorangegangenen Ansprüche mit einer Antriebswelle (8, 61) für das Fahrzeug-Rad (5), wobei der Dämpfer (2, 31) in Fzg.-Fahrtrichtung betrachtet vor oder hinter der Antriebswelle (8, 61) mit seiner Unterkante um ein Maß nicht größer als der Durchmesser des Dämpfers (2, 31) vom unteren Blattfederelement (1, 41) beabstandet angeordnet ist.

13. Einzelradaufhängung nach einem der vorangegangenen Ansprüche 6 - 11, wobei am oberen Blattfederelement (51) eine Ausnehmung (91) vorgesehen ist.

14. Einzelradaufhängung nach einem der vorangegangenen Ansprüche 6 - 11 oder 13, wobei zumindest eines der beiden Blattfederelemente (1, 41, 51) aus einem faserverstärkten Werkstoff ausgebildet ist.

## Claims

1. Independent suspension system of a two-track vehicle with a lower leaf spring element (1, 41) which is configured in a fibre composite material, and assumes the wheel guidance for the vehicle wheel (5) together with a damper (2, 3) which is arranged in the manner of a damper strut, and is attached on one side to a wheel support (1, 21) and on the other side to an axle carrier or directly to the vehicle body (6), **characterized in that** the lower leaf spring element (1, 41) is oriented at least approximately in the vehicle transverse direction and, on the vehicle body side, has a supporting base which is measured in the vehicle longitudinal direction (F) and the length of which corresponds to at least 0.4 times the length of the lower leaf spring element (1, 41) as measured in the vehicle transverse direction, and the lower leaf spring element (1, 41) being arranged below the wheel rotational axis (D) as viewed in the vehicle vertical direction (H).

2. Independent suspension system according to Claim 1, the lower leaf spring element (1, 41) assuming the spring function, and no further element which guides the wheel support (3, 21) of a non-steerable wheel being provided in addition to the said single lower leaf spring element (1, 41) and the damper (2, 31).

3. Independent suspension system according to Claim 1 or 2, the vehicle body-side supporting base being longer as viewed in the vehicle longitudinal direction than a wheel-side supporting base.

4. Independent suspension system according to one of the preceding claims, a split wheel support (3, 21) with an integrated steering rotational axis being provided for the production of a steering capability of the wheel (5), the first wheel support element (3a, 2.21) of which wheel support (3, 21) being guided by way of the lower leaf spring element (1, 41) and the damper (2, 31), whereas the second wheel support element (3b, 2.11) of which wheel support (3, 21) supports the wheel (5), is guided by way of the first wheel support element (3a, 2.21) and a track rod (7, 71) or the like.

5. Independent suspension system according to one of the preceding claims, the wheel support-side end section of the lower leaf spring element (1, 41) being configured so as to be curved around the vehicle longitudinal axis (F) in the non-installed state, and therefore applying a torque about the vehicle longitudinal axis (F) on the wheel support (3, 21) in the installed state.

6. Independent suspension system according to Claim 1, a second upper leaf spring element (51) which is oriented at least approximately in the vehicle transverse direction connecting the wheel support (3, 21) to the vehicle body, and the upper leaf spring element (51) being arranged above the tyre contour (K) of a vehicle tyre (11).

7. Independent suspension system according to Claim 6, the upper leaf spring element (51) protruding beyond the wheel centre longitudinal plane (M) in the direction of the vehicle exterior, as viewed in the vehicle transverse direction (Q).

8. Independent suspension system according to either of the preceding Claims 6 and 7, the wheel support (3, 21) being split into a first wheel support part (2.11) which can also be steered and a second wheel support part (2.2) which cannot also be steered and is guided by way of the two leaf spring elements (41, 51), and the two wheel support parts (2.11, 2.21) being connected to one another in an articulated manner.

9. Independent suspension system according to one of the preceding Claims 6 to 8, at least one leaf spring element (1, 41, 51) being arranged at least on the vehicle body side in an inclined manner with respect to a horizontal plane, as viewed in the vehicle transverse direction (Q).

10. Independent suspension system according to one of Claims 6 to 9, the lower leaf spring element (1, 41) and/or the upper leaf spring element (51) being attached in a non-positive manner to the wheel support (3, 21) and/or to the axle carrier or vehicle body (6), and an at least approximately wedge-shaped positively locking connection being provided on at least one leaf spring element (1, 41, 51) for the transmission of tensile/compressive forces in the vehicle transverse direction.

11. Independent suspension system according to one of the preceding Claims 6 to 10, at least one of the edge regions (1v, 1h) (as viewed in the vehicle driving direction) of at least one leaf spring element (1, 41, 51) being of reinforced configuration with respect to a section (1s) which lies between the edge regions (1v, 1h).

12. Independent suspension system according to one of the preceding claims with a drive shaft (8, 61) for the vehicle wheel (5), the damper (2, 31) being arranged in front of or behind the drive shaft (8, 61) as viewed in the vehicle drive direction, with the lower edge of the said damper (2, 31) being spaced apart from the lower leaf spring element (1, 41) by a dimension which is not greater than the diameter of the damper (2, 31).

13. Independent suspension system according to one of the preceding Claims 6 to 11, a recess (91) being provided on the upper leaf spring element (51).

14. Independent suspension system according to one of the preceding Claims 6 to 11 or 13, at least one of the two leaf spring elements (1, 41, 51) being configured from a fibre-reinforced material.

## Revendications

1. Suspension à roues indépendantes d'un véhicule à deux voies, comprenant un élément formant ressort à lames inférieur (1, 41), réalisé en matériau composite en fibres et assurant le guidage de roue pour la roue de véhicule (5) conjointement avec un amortisseur (2, 3) disposé à la manière d'une jambe d'amortisseur, ledit élément étant relié à un support de roue (1, 21) d'une part et à un support d'essieu ou directement à la carrosserie de véhicule (6) d'autre part,
**caractérisée en ce que** l'élément formant ressort à lames inférieur (1, 41) est aligné au moins approximativement dans la direction transversale du véhicule et possède côté carrosserie de véhicule une base d'appui mesurée dans la direction longitudinale (F) du véhicule et dont la longueur correspond au moins à 0,4 fois la longueur de l'élément formant ressort à lames inférieur (1, 41), mesurée dans la direction transversale du véhicule, et l'élément formant ressort à lames inférieur (1, 41) étant disposé au-dessous de l'axe de rotation de roue (D), vu dans la direction verticale du véhicule (H).

2. Suspension à roues indépendantes selon la revendication 1, dans laquelle l'élément formant ressort à lames inférieur (1, 41) assure la fonction de ressort, et
dans laquelle, en plus de cet unique élément formant ressort à lames inférieur (1, 41) et de l'amortisseur (2, 31), aucun autre élément guidant le support de roue (3, 21) d'une roue non dirigeable n'est prévu.

3. Suspension à roues indépendantes selon la revendication 1 ou 2, dans laquelle la base d'appui côté carrosserie de véhicule est plus longue qu'une base d'appui côté roue, vue dans la direction longitudinale du véhicule.

4. Suspension à roues indépendantes selon l'une quelconque des revendications précédentes, dans laquelle, pour représenter une dirigeabilité de la roue (5), un support de roue divisé en deux (3, 21) à pivot de direction intégré est prévu dont le premier élément de support de roue (3a, 2.21) est guidé à travers l'élément formant ressort à lames inférieur (1, 41) et l'amortisseur (2, 31), alors que son deuxième élément de support de roue (3b, 2.11) portant la roue (5) est guidé à travers le premier élément de support de roue (3a, 2.21) et une barre d'accouplement (7, 71) ou similaire.

5. Suspension à roues indépendantes selon l'une quelconque des revendications précédentes, dans laquelle la portion d'extrémité côté support de roue de l'élément formant ressort à lames inférieur (1, 41) est réalisée en étant courbée autour de l'axe longitudinal du véhicule (F) à l'état non installé et applique ainsi à l'état installé un moment autour de l'axe longitudinal du véhicule (F) sur le support de roue (3, 21) .

6. Suspension à roues indépendantes selon la revendication 1, dans laquelle un deuxième élément formant ressort à lames supérieur (51), aligné au moins approximativement dans la direction transversale du véhicule, relie le support de roue (3, 21) à la carrosserie de véhicule, et dans laquelle l'élément formant ressort à lames supérieur (51) est disposé au-dessus du contour de pneu (K) d'un pneu de véhicule (11) .

7. Suspension à roues indépendantes selon la revendication 6, dans laquelle l'élément formant ressort à lames supérieur (51), vu dans la direction transversale du véhicule (Q), dépasse du plan longitudinal médian de roue (M) vers l'extérieur du véhicule.

8. Suspension à roues indépendantes selon l'une quelconque des revendications précédentes 6 ou 7, dans laquelle le support de roue (3, 21) est divisé en deux en une première pièce de support de roue co-dirigeable (2.11) et une deuxième pièce de support de roue non co-dirigeable (2.2) guidée par les deux éléments formant ressort à lames (41, 51), et dans laquelle les deux pièces de support de roue (2.11, 2.21) sont reliées ensemble de manière articulée.

9. Suspension à roues indépendantes selon l'une quelconque des revendications précédentes 6 à 8, dans laquelle au moins un élément formant ressort à lames (1, 41, 51) est relié de manière inclinée par rapport à un plan horizontal, au moins au côté carrosserie de véhicule, vu dans la direction transversale du véhicule (Q) .

10. Suspension à roues indépendantes selon l'une quelconque des revendications précédentes 6 à 9, dans laquelle l'élément formant ressort à lames inférieur (1, 41) et/ou l'élément formant ressort à lames supérieur (51) sont reliés par adhérence au support de roue (3, 21) et/ou au support d'essieu ou à la carrosserie de véhicule (6), et pour la transmission de forces de traction/compression dans la direction transversale du véhicule, une liaison par complémentarité de forme au moins approximativement en forme de coin est prévue sur au moins un élément formant ressort à lames (1, 41, 51) dans la direction transversale du véhicule.

11. Suspension à roues indépendantes selon l'une quelconque des revendications précédentes 6 à 10, dans laquelle au moins l'une des zones marginales (1v, 1h), vues dans le sens de la marche du véhicule, d'au moins un élément formant ressort à lames (1, 41, 51) est réalisée de manière renforcée par rapport à une portion (1s) située entre les zones marginales (1v, 1h).

12. Suspension à roues indépendantes selon l'une quelconque des revendications précédentes, comprenant un arbre de transmission (8, 61) pour la roue de véhicule (5), dans laquelle l'amortisseur (2, 31), vu dans le sens de la marche du véhicule, avant ou après l'arbre de transmission (8, 61), est disposé avec son bord inférieur à distance de l'élément formant ressort à lames inférieur (1, 41) d'une quantité qui n'est pas supérieure au diamètre de l'amortisseur (2, 31).

13. Suspension à roues indépendantes selon l'une quelconque des revendications précédentes 6 à 11, dans laquelle un évidement (91) est prévu sur l'élément formant ressort à lames supérieur (51).

14. Suspension à roues indépendantes selon l'une quelconque des revendications précédentes 6 à 11 ou 13, dans laquelle au moins l'un des deux éléments formant ressort à lames (1, 41, 51) est réalisé à partir d'un matériau renforcé par des fibres.
